# EUROPÄISCHE PATENTSCHRIFT

(11) **EP 1 056 623 B1**
(45) Veröffentlichungstag und Bekanntmachung des Hinweises auf die Patenterteilung: **08.10.2003**
(21) Anmeldenummer: 99913075.0
(22) Anmeldetag: 16.02.1999
(51) Int. Cl.: B60R 16/02

(54) **VORRICHTUNG ZUR ELEKTRISCHEN ENERGIEVERSORGUNG**
DEVICE FOR SUPPLYING ELECTRIC ENERGY
DISPOSITIF D'ALIMENTATION EN ENERGIE ELECTRIQUE

(30) Priorität: 18.02.1998 DE 19806784
(43) Veröffentlichungstag der Anmeldung: 06.12.2000
(73) Patentinhaber: ROBERT BOSCH GMBH, 70442 Stuttgart (DE)
(72) Erfinder: WEIGL, Andreas, D-76351 Linkenheim-Hochstetten (DE); HUGEL, Robert, D-76199 Karlsruhe (DE)
(86) Internationale Anmeldenummer: DE9900425
(87) Internationale Veröffentlichungsnummer: WO99042331

(56) Entgegenhaltungen:
- EP-A- 0 519 179
- DE-A- 3 717 716
- DE-A- 4 024 325
- DE-A- 4 028 242
- DE-A- 19 530 721
- DE-A- 19 625 104

## Beschreibung

Die Erfindung geht aus von einer Vorrichtung zur elektrischen Energieversorgung, insbesonders für sicherheitsrelevante Systeme in einem Kraftfahrzeug nach der Gattung des Hauptanspruchs.

### Stand der Technik

Eine solche Vorrichtung ist aus dem Dokument DE-A-40 24325 bekannt.

Elektrische Systeme bzw. Verbraucher in Kraftfahrzeugen werden im Regelfall vom Generator und der Fahrzeugbatterie mit elektrischer Energie versorgt. Der Generator wird von der Brennkraftmaschine angetrieben und gibt elektrische Energie an die Fahrzeugbatterie, üblicherweise einen Bleiakkumulator, ab. Die Fahrzeugbatterie versorgt die elektrischen Verbraucher auch zu Zeiten, zu denen der Generator nicht genügend elektrische Energie liefern kann. Damit die Funktion sicherheitsrelevanter Verbraucher bzw. sicherheitsrelevanter Systeme, beispielsweise die Versorgung elektrischer Schlösser sehr zuverlässig gewährleistet werden kann, wird bei stehendem Motor und Ausfall der Fahrzeugbatterie oder einer sonstigen Störung im elektrischen System eine Zusatzenergiequelle, beispielsweise eine Batterie oder ein Akkumulator zur Versorgung der sicherheitsrelevanten Systeme zugeschaltet. Solche sicherheitsrelevanten Verbrauchers können auch Steuergeräte oder Aktoren usw. sein.

Die Zusatzenergiequelle muß auch während des regulären Betriebes ständig überwacht werden, damit sie im Einsatzfall betriebsbereit ist. Ausserdem muß sichergestellt sein, daß bei einem Ausfall der Zusatzenergiequelle diese rechtzeitig ausgetauscht werden kann.

Eine Spannungsversorgungsschaltung für elektronische Geräte, insbesondere für sicherheitsrelevante Geräte in Kraftfahrzeugen ist aus der EP-A-0 363 356 bekannt. Bei dieser bekannten Spannungsversorgungsschaltung sind den sicherheitsrelevanten elektrischen Geräten Zusatzbatterien zugeordnet, die die Spannungsversorgung übernehmen, falls die Hauptbatterie ausfällt oder die Verbindung zwischen der Hauptbatterie und den Geräten unterbrochen wird. Die Zusatzbatterien, die den Geräten zugeordnet sind, werden selbst nicht überwacht, es wird lediglich angezeigt, wenn die Hauptversorgung ausfällt und die Zusatzbatterie zur Spannungsversorgung einspringt.

### Aufgabe der Erfindung

Da es bei Batterien und Akkumulatoren nicht möglich ist, den Ausfallzeitpunkt mit ausreichender Sicherheit vorherzubestimmen und damit den rechtzeitigen Austausch zu gewährleisten, ohne ihn präventiv unnötig früh vornehmen zu müssen, besteht die Aufgabe der Erfindung darin, zu gewährleisten, daß bei einem Defekt bzw. bei Entladung der eigentlich zur Spannungsversorgung für einen sicherheitsrelevanten oder wichtigen Verbraucher im Normalbetrieb eingesetzten Batterie bzw. des Akkumulators ein Ersatz bereit gestellt wird, wobei dieser Ersatz eine Batterie bzw. einen Akkumulator umfaßt, die bzw. der mit Sicherheit geladen ist. Weiterhin besteht die Aufgabe der Erfindung darin, zu gewährleisten, daß die ersatzweise eingesetzte Batterie bzw. der Akkumulator nicht laufend hinsichtlich ihres bzw. seines Ladungszustandes kontrolliert werden muß und daß dennoch sichergestellt ist, daß die Batterie bzw. der Akkumulator ausreichend geladen ist.

### Vorteile der Erfindung

Die erfindungsgemäße Vorrichtung zur elektrischen Energieversorgung mit den Merkmalen des Anspruchs 1 hat den Vorteil, daß die Ersatzenergiequelle bzw. Zusatzenergiequelle, bspw. eine Batterie oder ein Akkumulator stets einen Ladezustand aufweist, der sicherstellt, daß eine Energieversorgung für einen sicherheitsrelevanten Verbraucher bzw. ein sicherheitsrelevantes System gewährleistet ist, falls die Hauptenergiequelle für den betreffenden Verbraucher ausfällt. Dabei ist es besonders vorteilhaft, daß die Zusatzenergiequelle bzw. die Ersatzenergiequelle selbst nicht überwacht werden muß.

Erzielt werden diese Vorteile durch eine Vorrichtung zur elektrischen Energieversorgung, insbesonders für sicherheitsrelevante Systeme bzw. Verbraucher im Kraftfahrzeug mit den Merkmalen des Anspruchs 1. Bei einer solchen Vorrichtung werden die sicherheitsrelevanten Systeme normalerweise über je eine eigene Batterie mit elektrischer Energie versorgt. Diese Batterie wird von der Bordnetzbatterie bzw. vom Generator laufend nachgeladen. Fällt die Batterie aus, wird das sicherheitsrelevante System direkt aus der Bordnetzbatterie versorgt. Eine Überwachung des Ladezustandes der Bordnetzbatterie kann dabei entfallen, da bei üblichem Fahrzeugbetrieb eine ordnungsgemäße Funktionsfähigkeit der elektrischen Versorgung durch die Bordnetzbatterie davon ausgegangen werden kann, daß die Bordnetzbatterie zumindest so ausreichend geladen worden ist, daß sie die Energie für die sicherheitsrelevanten Systeme liefern kann.

Mit der erfindungsgemäßen Vorrichtung zur elektrischen Energieversorung kann somit eine redundante Energieversorung für sicherheitsrelevante Verbraucher aufgebaut werden, bei der in vorteilhafter Weise eine Ladezustandserkennung entfallen kann.

Weitere Vorteile der Erfindung bestehen darin, daß auf eine komplizierte Überwachungselektronik verzichtet werden kann, da ein Ausfall der Batterie bzw. des Akkumulators nicht überwacht wird, sondern im Betrieb erkannt wird. Auch bei Ausfall der Primärenergiequelle für das sicherheitsrelevante System ist noch genügend Ersatzenergie vorhanden. Bei Ausfall der Fahrzeugbatterie und dadurch Ausbleiben der Nachladung der Zusatzenergiequelle bleibt die Funktion des sicherheitsrelevanten Systems für eine weitere definierbare Zeit abhängig von der Größe der Zusatzenergiequelle erhalten. Weiterhin kann die Lebensdauer der Batterie bzw. des Akkumulators, durch optimierte Lade- und Entladezyklen verlängert werden. Es ist in vorteilhafter Weise nur eine Versorgungsleitung von der Zusatzenergiequelle zum Steuergerät oder zu jedem Steuergerät zu führen, und es sind in vorteilhafter Weise keine zusätzlichen Steuerleitungen nötig, da die Umschalteinheit zwischen Zusatzenergiequelle und Fahrzeugbatterie nur einmal an der Zusatzenergiequelle vorhanden sein muß und nicht in jedem Steuergerät. Die Ausgestaltungen der Erfindung, die die zusätzlichen Vorteile ermöglichen, sind im einzelnen in den Unteransprüchen aufgeführt.

### Zeichnung

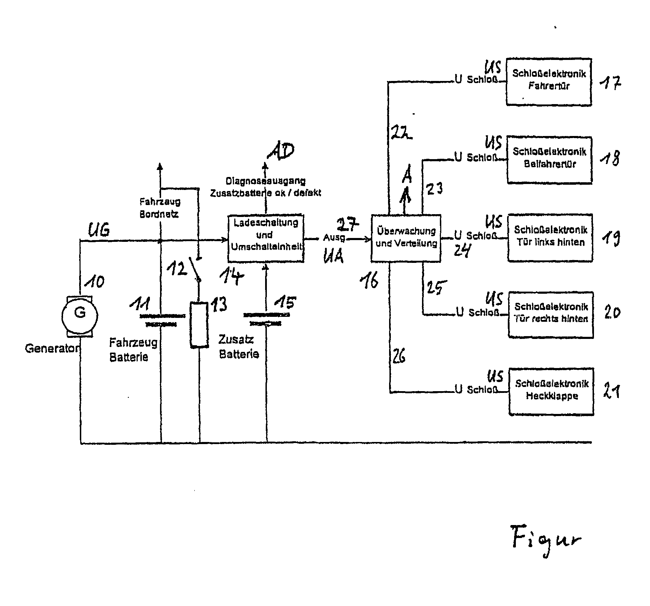

Ein Ausführungsbeispiel der Erfindung ist in der einzigen Figur dargestellt und wird in der nachfolgenden Beschreibung näher erläutert.

### Beschreibung

In der Figur ist ein Ausführungsbeispiel der Erfindung dargestellt, das beispielhaft die Energieversorung für Elektronikschlösser in einem Kraftfahrzeug darstellt. Der Generator 10, der ein üblicher Drehstromgenerator samt Spannungsregler ist, versorgt sowohl die Fahrzeugbatterie 11 als auch mit dieser über Schalter 12 verbindbare beliebige Bordnetzverbraucher 13. Über eine Ladeschaltung und Umschalteinheit 14 ist eine Zusatzbatterie 15 bzw. ein Akkumulator sowohl mit dem Generator 10 als auch mit einer Schaltung zur Überwachung und Verteilung 16 verbindbar. Der Schaltung zur Überwachung und Verteilung 16 wird dabei die Ausgangsspannung UA der Ladeschaltung und Umschalteinheit 14 zugeführt, der ihrerseits die Generatorspannung UG zugeführt wird.

Von der Schaltung zur Überwachung und Verteilung 16 führen Verbindungen zu den einzelnen Schloßelektronik-Kreisen, wobei unterteilt wird in Schloßelektronik Fahrertür 17, Schloßelektronik Beifahrertür 18, Schloßelektronik Tür links hinten 19, Schloßelektronik Tür rechts hinten 20 und Schloßelektronik Heckklappe 21. Die zugeführte Spannung ist jeweils mit US bezeichnet. Die Verbindung zwischen der Überwachung und Verteilung 16 und den einzelnen Schloßelektronik-Kreisen 17 bis 21 erfolgt jeweils über eine einzige Leitung 22 bis 26. Zwischen der Ladeschaltung und Umschalteinheit 14 und der Überwachung und Verteilung 16 ist nur eine Leitung 27 erforderlich.

Der Aufbau der elektrischen Versorgungsschaltung für sicherheitsrelevante Systeme im Kraftfahrzeug, der in der Figur beispielhaft für insgesamt 5 Elektroschlösser dargestellt ist, ermöglicht es, daß nur eine Versorgungsleitung von der Zusatzenergiequelle, also der Zusatzbatterie 15 zu jedem Steuergerät bzw. zu jeder Schloßelektronik 17 bis 21 zu führen ist. Es werden keine zusätzlichen Steuerleitungen benötigt und die Umschalteinheit zwischen der Zusatzbatterie 15 und der Fahrzeugbatterie 11 ist nur einmal an der zusatzbatterie vorhanden bzw. in die Ladeschaltung und Umschalteinheit 14 integriert. Es wird somit nicht für jedes Steuergerät bzw. jede Schloßelektronik 17.bis 21 eine eigene Umschalteinheit benötigt.

Bei dem in der Figur dargestellten Versorgungssystem lädt der Generator 10 in üblicherweise die Fahrzeugbatterie 11, diese versorgt die Bordnetzverbraucher mit elektrischer Energie. Von den Bordnetzverbrauchern ist lediglich ein Verbraucher 13 dargestellt, der über den Schalter 12 zuschaltbar ist. Die Ladeschaltung und Umschalteinheit wird vom Generator 10 bzw. aus der Fahrzeugbatterie 11 mit Energie versorgt. Die Ladeschaltung sorgt ihrerseits für eine geeignete Nachladung der Zusatzbatterie 15, gegebenenfalls über einen integrierten Spannungswandler, der die Ladespannung für die Zusatzbatterie bei zu geringer Generatorspannung UG erhöhen kann, falls dies bei starker Bordnetzbelastung erforderlich ist. Die Ladestrategie für die Zusatzbatterie 15 wird beispielsweise so gewählt, daß die Batterielebensdauer optimiert wird. Eine ggf. in die Ladeschaltung integrierte Umschalteinheit versorgt im Normalfall die nachgeschalteten sicherheitsrelevanten Systeme, im Ausführungsbeispiel also die einzelnen Schloßelektroniken mit der benötigten elektrischen Versorgungsspannung US aus dieser Zusatzbatterie 15.

Die Umschalteinheit der Ladeschaltung und Umschalteinheit 14 erkennt, wenn die Ausgangsspannung der Zusatzbatterie 15 einen festgelegten Grenzwert unterschreitet und schaltet dann auf die Fahrzeugbatterie als Ersatzenergiequelle um. Die Zusatzbatterie 15 wird dabei über einen Schalter (z.B. Transistor ) abgekoppelt. Die Umschalteinheit umfaßt beispielsweise Vergleichsmittel, die die Spannung der Zusatzbatterie 15 mit einer vorgebbaren Schwellenspannung vergleichen und bei Unterschreiten der Schwellenspannung eine Umschaltung auf die Fahrzeugbatterie 11 bewirken und gegebenenfalls eine Abkopplung der Zusatzbatterie 15 bewirken. Die Umschalteinheit umfaßt weiterhin Mittel, die es ermöglichen, daß gleichzeitig mit der erfolgten Umschaltung an einem Diagnoseausgang AD ein Zusatzbatteriestatus ausgegeben werden, der zum Erneuern der Zusatzbatterie auffordert. Dieser Zusatzbatteriestatus kann beispielsweise eine im Fahrzeug eingebaute Anzeige auslösen.

Die von der Ladeschaltung und Umschalteinheit 14 versorgten nachgeschalteten Systeme werden somit weiterhin über den selben Spannungsausgang an der Ladeschaltung und Umschalteinheit 14 versorgt und müssen selbst über keine eigenen Komponenten zur Ersatzenergieversorgung verfügen. Bei dem dargestellten Ausführungsbeispiel für ein Ersatzenergiekonzept für Elektroschlösser ist weiterhin zwischen die Ladeschaltung und Umschalteinheit 14 und die von ihr versorgten Elektroschloßelektroniken 17 bis 21 eine Überwachungs und Verteilungseinheit 16 geschaltet, die die Aufgabe hat, die Stromaufnahme der einzelnen Systeme zu überwachen und bei Überschreiten des Nennstromes bzw. Kurzschluß in einem Zweig diesen Zweig über intern vorhandene Schaltmittel abzuschalten um die Funktionen der anderen Systeme nicht zu gefährden. Gegebenenfalls kann die Überwachung und Verteilung 16 so ausgestaltet werden, das ein erkannter Defekt, der zum Abschalten eines Zweiges führt über eine eigene Anzeige A angezeigt wird.

Die Erfindung, die im Ausführungsbeispiel nach der Figur für die Versorgung sicherheitsrelevanter Systeme im Kraftfahrzeug anhand einer Versorgungsschaltung für Elektroschlösser aufgezeigt wird, ist selbstverständlich nicht auf die dargestellten Systeme beschränkt, sondern kann beispielsweise auch für die redundante Versorgung von elektrischen Bremsen in Fahrzeugen, für eine Versorgung von Steuergeräten, insbesonders für ABS oder Rückhaltesysteme usw. eingesetzt werden. Generell ist die Erfindung für alle Systeme oder Geräte geeignet, bei denen ein elektrischer Verbraucher sowohl von einer Zusatzbatterie als auch von der Hauptbatterie versorgt werden kann, wobei wesentlich ist, daß die im normalen Betrieb vorhandene Energiezufuhr aus der nachladbaren Zusatzbatterie 15 bzw. einem entsprechenden Akkumulator erfolgt und lediglich bei einem Defekt oder einer zu starken Entladung der Zusatzbatterie 15 auf die Hauptbatterie, insbesonders die Fahrzeugbatterie 11 umgeschaltet wird.

Durch diese Vorgehensweise erübrigt sich eine Überwachung des Ladezustandes der Zusatzbatterie, da in Notfällen immer noch die Fahrzeugbatterie bereit steht, wobei davon ausgegangen werden kann, daß bei einem sich in Betrieb befindlichen Fahrzeug die Fahrzeugbatterie 11 noch soviel Energiereserven aufweist, um den Verbraucher, insbesonders einen oder mehrere sicherheitsrelevante Verbraucher noch für eine vorgebbare Zeit mit Energie zu versorgen.

Es ist auch möglich, Gruppen von Systemen oder Gruppen von Geräten zusammenzufassen und gemeinsam aus der Zusatzbatterie oder der Hauptbatterie zu versorgen.

## Patentansprüche

1. Vorrichtung zur Spannungsversorgung für vorgebbare elektronische Verbraucher in Kraftfahrzeugen, bei der Gruppen von Verbrauchern (17-21) oder jedem einzelnen Verbraucher eine eigene Zusatzbatterie (15) bzw. ein Akkumulator zugeordnet ist, die bzw. der über eine Ladeschaltung und Umschalteinheit (14) mit der Fahrzeugbatterie (11) oder dem Generator (10) des Fahrzeugs verbindbar ist, und im Normalbetrieb der Verbraucher oder Gruppen von Verbrauchern mit der Zusatzbatterie in Verbindung steht oder stehen und bei Ausfall oder Entladung der Zusatzbatterie eine Umschaltung auf die Fahrzeugbatterie erfolgt, **dadurch gekennzeichnet, dass** zur Aufrechterhaltung der Spannungsversorgung der Verbraucher oder die Gruppe von Verbrauchern (17-21) dann auf die, Fahrzeugbatterie (11) um geschaltet und von dieser versorgt wird oder werden, und eine Anzeige (A) ausgelöst wird, die auf die Umschaltung hinweist, und dass die Verbraucher (17-21) sicherheitsrelevante Systeme oder sicherheitsrelevante Verbraucher oder Gruppen von sicherheitsrelevanten Verbrauchern im Kraftfahrzeug sind.

2. Vorrichtung zur Spannungsversorgung nach Anspruch 1 oder 2, **dadurch gekennzeichnet, dass** die sicherheitsrelevanten Verbraucher (17-21) Schlüsselektronikkreise in einem Kraftfahrzeug sind, wobei jedem Schltisselektronikkreis bzw. einem zugehörigen Steuergerät jeweils eine eigene Spannung (US) aus der Zusatzbatterie (15) zugeführt und Mittel zur Überwachung und Verteilung (16) vorhanden sind, denen die Spannung (UA) zugeführt wird und die bei Unterschreiten einer Schwellenspannung den einzelnen Verbrauchern die benötigten Spannungen (US) zuführen und gegebenenfalls eine Abtrennung eines fehlerhaften Verbrauchers vornehmen.

3. Vorrichtung zur Spannungsversorgung nach einem der vorhergehenden Ansprüche, **dadurch gekennzeichnet, dass** die sicherheitsrelevanten Verbraucher elektrische Bremsen oder Steuergeräte für ABS-Systeme oder Rückhaltesysteme sind.

4. Vorrichtung zur Spannungsversorgung nach einem der vorhergehenden Ansprüche, **dadurch gekennzeichnet, dass** die Ladeschaltung und Umschalteinheit (14) Spannungsvergleichsmittel umfaßt, die die Spannung der Zusatzbatterie mit einer vorgebbaren Sollspannung vergleichen und bei Unterschreiten der Sollspannung eine Umschaltung auf die Hauptbatterie (11) veranlassen und gegebenenfalls eine Anzeige (AD) auslösen.

5. Vorrichtung zur Spannungsversorgung nach einem der vorhergehenden Ansprüche, **dadurch gekennzeichnet, dass** die Ladeschaltung und Umschalteinheit Mittel umfaßt, die eine vorgebbare Ladestrategie für die Zusatzbatterie ermöglichen und diese so gewählt wird, dass die Lebensdauer der Zusatzbatterie maximal wird.

## Claims

1. Device for supplying voltage for predefinable electronic chargings in motor vehicles in which a separate supplementary battery (15) or an accumulator battery is assigned to groups of chargings (17-21) or to each individual charging, which separate supplementary battery (15) or accumulator battery can be connected via a charging circuit and switch-over unit (14) to the vehicle battery (11) or to the generator (10) of the vehicle, and is connected to the supplementary battery during normal operation of the chargings or groups of chargings and switching over to the vehicle battery takes place when the supplementary battery fails or runs out, **characterized in that**, in order to maintain the voltage supply, the charging or the group of chargings (17-21) is then switched over to the vehicle battery (11) and supplied by it, and a display (A) which indicates the switching-over operation is triggered, and **in that** the chargings (17-21) are safety-related systems or safety-related chargings or groups of safety-related chargings in the motor vehicle.

2. Device for supplying voltage according to Claim 1 or 2, **characterized in that** the safety-related chargings (17-21) are key electronic circuits in a motor vehicle, each key electronic circuit or an associated control unit each being fed a separate voltage (US) from the supplementary battery (15), and monitoring and distribution means (16) being provided to which the voltage (UA) is supplied and which supply the individual chargings with the required voltages (US) when the voltage drops below a threshold voltage, and if appropriate disconnect a faulty charging.

3. Device for supplying voltage according to one of the preceding claims, **characterized in that** the safety-related chargings are electrical brakes or control units for ABS systems or restraint systems.

4. Device for supplying voltage according to one of the preceding claims, **characterized in that** the charging circuit and switch-over unit (14) comprise voltage comparison means which compare the voltage of the supplementary battery with a predefinable set point voltage and bring about switching over to the main battery (11), and if appropriate trigger a display (AD), when the voltage drops below the set point voltage.

5. Device for supplying voltage according to one of the preceding claims, **characterized in that** the charging circuit and switch-over unit comprise means which make possible a predefinable charging strategy for the supplementary battery and said means are selected in such a way that the service life of the supplementary battery is maximized.

## Revendications

1. Dispositif d'alimentation en tension pour consommateurs électroniques prévus sur véhicules automobiles, dans lequel peuvent être associés à des groupes de consommateurs (17-21) ou à chaque consommateur individuel une propre batterie supplémentaire (15) ou un accumulateur, laquelle ou lequel est relié(e), par un circuit de charge et une unité de commutation (14), à la batterie (11) du véhicule ou au générateur (10) du véhicule et, en fonctionnement normal, le consommateur ou les groupes de consommateurs est ou sont en liaison avec la batterie supplémentaire et, en cas de panne ou de décharge de la batterie supplémentaire, une commutation s'effectue sur la batterie du véhicule,
**caractérisé en ce que**
pour le maintien de l'alimentation en tension, le consommateur ou le groupe de consommateurs (17-21) est alors commuté sur la batterie (11) du véhicule et alimenté par celle-ci et un affichage (A) qui indique la commutation est déclenché, et **en ce que** les consommateurs (17-21) sont des systèmes importants pour la sécurité ou des consommateurs importants pour la sécurité ou des groupes de consommateurs importants pour la sécurité dans le véhicule automobile.

2. Dispositif d'alimentation en tension selon la revendication 1 ou 2,
**caractérisé en ce que**
les consommateurs importants pour la sécurité (17-21) sont des circuits électroniques clés sur un véhicule automobile, dans lequel une propre tension (US) provenant de la batterie supplémentaire (15) est amenée respectivement à chaque circuit électronique clé et à chaque appareil de commande associé et il existe des moyens pour le contrôle et la répartition (16), auxquels la tension (UA) est amenée et qui, lorsqu'une tension seuil n'est pas atteinte, amènent aux consommateurs respectifs les tensions nécessaires (US) et éventuellement effectuent une séparation d'un consommateur défectueux.

3. Dispositif d'alimentation en tension selon l'une des revendications précédentes,
**caractérisé en ce que**
les consommateurs importants pour la sécurité sont des freins ou appareils de commande électriques pour systèmes ABS ou systèmes de retenue.

4. Dispositif d'alimentation en tension selon l'une des revendications précédentes,
**caractérisé en ce que**
le circuit de charge et l'unité de commutation (14) comprennent des moyens de comparaison de la tension qui comparent la tension de la batterie supplémentaire à une tension de consigne prédéterminée et, lorsque la tension de consigne n'est pas atteinte, provoquent une commutation sur la batterie principale (11) et déclenchent éventuellement un affichage (AD).

5. Dispositif d'alimentation en tension selon l'une des revendications précédentes,
**caractérisé en ce que**
le circuit de charge et l'unité de commutation comprennent des moyens qui permettent une stratégie de charge prédéterminée pour la batterie supplémentaire et celle-ci est choisie de manière que la durée de vie de la batterie supplémentaire est maximale.
